# EUROPEAN PATENT APPLICATION

(11) **EP 3 608 266 A1**
(43) Date of publication of application: **12.02.2020**
(21) Application number: 19190216.2
(22) Date of filing: 06.08.2019
(51) Int. Cl.: B65H 15/00, G03G 15/00, H04N 1/00

(54) **IMAGE PROCESSING SYSTEM**

(30) Priority: 07.08.2018 JP 2018148599
(71) Applicant: Toshiba Tec Kabushiki Kaisha, Shinagawa-ku Tokyo (JP)
(72) Inventor: Maruyama, Shinji, Tokyo, 141-8562 (JP)
(74) Representative: Hoffmann Eitle

(57) **Abstract**

According to one embodiment, an image processing system includes a document transport unit (10), a document reading unit (15), an apparatus main body, and a transport mechanism (30). The document transport unit feeds a document. The document reading unit reads the document fed by the document transport unit (10). The apparatus main body supports the document reading unit (15). The transport mechanism (30) transports the document of which reading has been completed by the document reading unit to the apparatus main body.

## Description

### CROSS-REFERENCE TO RELATED APPLICATION

This application is based upon and claims the benefit of priority from Japanese Patent Application No. 2018-148599, filed August 7, 2018, the entire contents of which are incorporated herein by reference.

### FIELD

Embodiments described herein relate to an image processing system.

### BACKGROUND

In the related art, there is a multi-function peripheral (hereinafter, referred to as "MFP"). For example, the MFP includes a document transport unit, a document reading unit, an apparatus main body, and a post-processing unit. The document transport unit feeds a document. The document reading unit reads the document fed by the document transport unit. The apparatus main body supports the document reading unit. For example, the apparatus main body is an image processing apparatus (image forming apparatus) having a heating unit. The post-processing unit performs post-processing such as binding on the sheets transported from the apparatus main body. The MFP discharges the document of which reading has been completed by the document reading unit to the discharging unit. For this reason, post-processing cannot be immediately performed on the documents of which reading has been completed by the document reading unit. For example, in the case of scanning or copying a plurality of documents stapled with a stapler (for example, a metal needle), it is necessary to remove the stapler from the stapled documents . Then, after scanning or copying a plurality of documents from which the stapler is removed, a user takes out the documents from the discharging unit and binds the documents to return the documents to the original state.

### SUMMARY OF THE INVENTION

One of the objects of the present invention is to improve prior art techniques and overcome at least some of the prior art problems as for instance above illustrated.

According to a first aspect of the invention, it is provided an image processing system, comprising: a document transporter configured to feed a document; a document reader configured to read the document fed by the document transporter; an apparatus main body configured to support the document reader; and a transport mechanism configured to transport the document after the document reader reads the document from the document reader to the apparatus main body.

Optionally, in the system according to the first aspect of the invention, the document transporter includes a first switching unit configured to switch between a discharge path for discharging the document after reading has been completed by the document reader to a discharging unit and a transport path for transporting the document after reading has been completed by the document reader to the apparatus main body.

Optionally, the system according to the first aspect of the invention further comprises a document reversing unit provided in the apparatus main body and configured to turn the document inside out, wherein the document reversing unit includes a second switching unit configured to switch between a transport path for transporting the document after reading has been completed by the document reader to the apparatus main body and a transport path for turning the document inside out after reading has been completed by the document reader and transporting the document to the apparatus main body.

Optionally, in the system according to the first aspect of the invention, the apparatus main body further includes a post-processing unit configured to post-process an object transported from the apparatus main body, and the transport mechanism includes a transporter for post-processing configured to transport the document after reading has been completed by the document reader to the post-processing unit.

Optionally, in the system according to the first aspect of the invention, the apparatus main body includes a fixing unit configured to fixe an image, and the transport unit for post-processing transports the document after reading has been completed by the document reader to the post-processing unit along a path not passing through the fixing unit.

Optionally, in the system according to the first aspect of the invention, the apparatus main body has a sheet feeding path for transporting the sheet fed from the document transporter to a printer.

Optionally, in the system according to the first aspect of the invention, the transport mechanism comprises a plurality of pairs of rollers.

According to a second aspect of the invention, it is provided an image processing method, comprising: feeding a document into a document transporter of an image processing system; reading the document fed by the document transporter; and transporting the document after a document reader reads the document from the document reader to an apparatus main body of the image processing system.

Optionally, in the method according to the second aspect of the invention, feeding the document comprises switching between a discharge path for discharging the document after reading has been completed by the document reader to a discharging unit and a transport path for transporting the document after reading has been completed by the document reader to the apparatus main body.

Optionally, the method according to the second aspect of the invention, further comprises turning the document inside out using a document reversing unit, turning the document comprising: switching between a transport path for transporting the document after reading has been completed by the document reader to the apparatus main body and a transport path for turning the document inside out after reading has been completed by the document reader and transporting the document to the apparatus main body.

Optionally, the method according to the second aspect of the invention further comprises post-processing an object transported from the apparatus main body; and transporting the document after reading has been completed by the document reader to post-processing.

Optionally, the method according to the second aspect of the invention further comprises fixing an image; and transporting the document after reading has been completed by the document reader to post-processing along a path not passing through a fixing unit.

Optionally, the method according to the second aspect of the invention further comprises transporting the sheet fed from the document transporter to a printer.

According to a third aspect of the invention, it is provided an image forming apparatus, comprising: a document transporter configured to feed a document; a document reader configured to read the document fed by the document transporter; a printer configured to form an image on a sheet; an apparatus main body configured to support the document reader and the printer; and a transport mechanism configured to transport the document after the document reader reads the document from the document reader to the apparatus main body.

Optionally, in the image forming apparatus according to the third aspect, the document transporter includes a first switching unit configured to switch between a discharge path for discharging the document after reading has been completed by the document reader to a discharging unit and a transport path for transporting the document after reading has been completed by the document reader to the apparatus main body.

Optionally, the image forming apparatus according to the third aspect of the invention further comprises a document reversing unit provided in the apparatus main body and configured to turn the document inside out, wherein the document reversing unit includes a second switching unit configured to switch between a transport path for transporting the document after reading has been completed by the document reader to the apparatus main body and a transport path for turning the document inside out after reading has been completed by the document reader and transporting the document to the apparatus main body.

Optionally, in the image forming apparatus according to the third aspect of the invention, the apparatus main body further includes a post-processing unit configured to post-process an object transported from the apparatus main body, and the transport mechanism includes a transporter for post-processing configured to transport the document after reading has been completed by the document reader to the post-processing unit.

Optionally, in the image forming apparatus according to the third aspect of the invention, the apparatus main body includes a fixing unit configured to fixe an image, and the transporter for post-processing transports the document after reading has been completed by the document reader to the post-processing unit along a path not passing through the fixing unit.

Optionally, in the image forming apparatus according to the third aspect of the invention, the apparatus main body has a sheet feeding path for transporting the sheet fed from the document transporter to the printer.

Optionally, in the image forming apparatus according to the third aspect of the invention, the transport mechanism comprises a plurality of pairs of rollers.

### DESCRIPTION OF THE DRAWINGS

FIG. 1 is a front view illustrating an example of an image processing system according to a first embodiment;
FIG. 2 is a block diagram illustrating the example of the image processing system;
FIG. 3 is an explanatory view of a discharge path of a document in a document discharging mode;
FIG. 4 is an explanatory view of a transport path of a document in a post-processing mode;
FIG. 5 is a front view illustrating an example of an image processing system according to Comparative Example;
FIG. 6 is a front view illustrating an image processing system according to a second embodiment;
FIG. 7 is a front view illustrating an image processing system according to Modified Example 1;
FIG. 8 is a front view illustrating an image processing system according to Modified Example 2; and
FIG. 9 is a front view illustrating an image processing system according to Modified Example 3.

### DETAILED DESCRIPTION

Embodiments provide an image processing system capable of omitting a user's operation of transferring a document of which reading has been completed by a document reading unit to an apparatus main body.

In general, according to one embodiment, an image processing system includes a document transport unit, a document reading unit, an apparatus main body, and a transport mechanism. The document transport unit feeds a document. The document reading unit reads the document fed by the document transport unit. The apparatus main body supports the document reading unit. The transport mechanism transports the document of which reading has been completed by the document reading unit to the apparatus main body.

Hereinafter, image processing systems according to embodiments will be described with reference to the drawings. In the drawings, the same reference numerals denote the same components. In each drawing, the dimensions and shapes of the respective members are exaggerated or simplified for easy viewing.

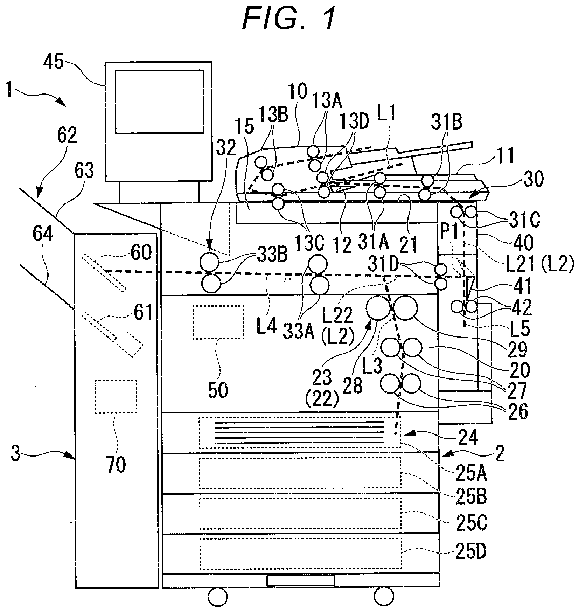

FIG. 1 is a front view illustrating an example of an image processing system 1 according to a first embodiment. For example, the image processing system 1 is a multifunction peripheral (MFP). As illustrated in FIG. 1, an image forming system 1 includes an image processing apparatus 2 and a post-processing apparatus 3 (post-processing unit). The image processing apparatus 2 forms an image on a sheet-like medium (hereinafter, referred to as a "sheet") such as paper. The image processing apparatus 2 is an example of an "image forming apparatus". The post-processing apparatus 3 performs post-processing on the sheet transported from the image processing apparatus 2. The post-processing apparatus 3 is an example of a "sheet processing apparatus".

The image processing apparatus 2 includes a document transport unit 10, a scanner unit (document reading unit) 15, an apparatus main body 20, a transport mechanism 30, a document reversing unit 40, a control panel (display unit) 45, and an image processing control unit 50.

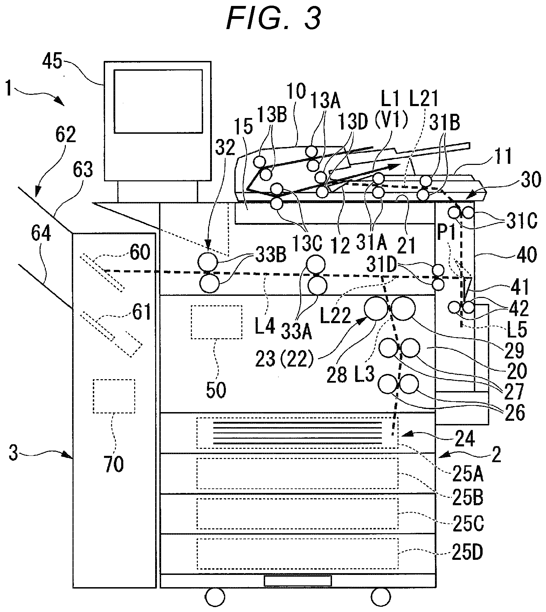

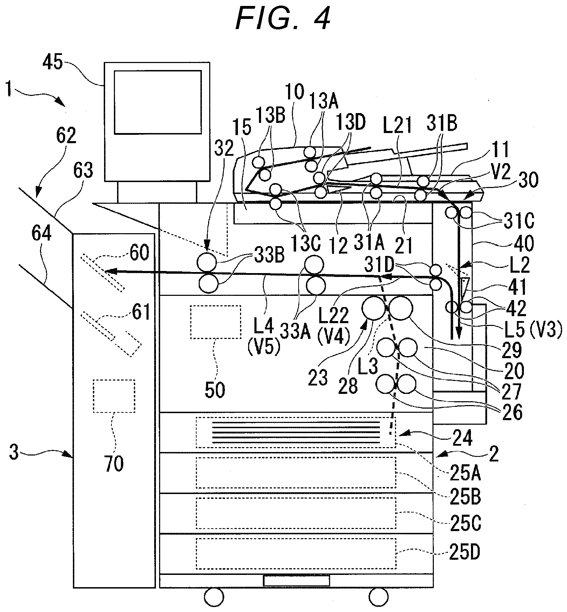

For example, the document transport unit 10 is an automatic document feeder (ADF). The document transport unit 10 (hereinafter, referred to as the "ADF 10") feeds a document to the apparatus main body 20 or a discharging unit 11. The ADF 10 includes a switching unit for transporting to main body (first switching unit) 12 that switches between a discharge path L1 and a transport path L2. The discharge path L1 is a path for discharging a document (hereinafter, also referred to as a "reading-completed document") of which reading has been completed by the scanner unit 15 to the discharging unit 11 (refer to FIG. 3). The transport path L2 is a path for transporting the reading-completed document to the apparatus main body 20 (refer to FIG. 4).

The ADF 10 includes a plurality of (four in the figure) transport roller pairs 13A to 13D. Each of the transport roller pairs 13A to 13D includes two transport rollers facing each other. For example, the two transport rollers are a driving roller and a driven roller. The driving roller is rotationally driven by a motor (not illustrated) . The driven roller rotates (performs followed rotation) as the driving roller rotates.

The scanner unit 15 is arranged below the ADF 10. The scanner unit 15 reads the document fed by the ADF 10. Alternatively, the scanner unit 15 reads the document placed on a document table 21. For example, the scanner unit 15 includes an image sensor (not illustrated). In the case of reading an image of the document placed on the document table 21, the image sensor moves along the document table 21. The scanner unit 15 feeds image information of the read document to the printer unit 22.

The apparatus main body 20 supports the scanner unit 15. In an upper portion of the apparatus main body 20, the document table 21 including transparent glass is provided. The apparatus main body 20 includes a printer unit 22 that forms an output image (hereinafter, referred to as a "toner image") with a developer such as toner on the basis of the image information transmitted from the scanner unit 15 or an external device. The printer unit 22 transfers the toner image onto the surface of the sheet. The printer unit 22 applies heat and pressure to the toner image transferred onto the sheet to fix the toner image on the sheet. The printer unit 22 includes a fixing unit (heating unit) 23 that fixes an image.

The apparatus main body 20 includes a feeding unit 24 that feeds the sheets to the printer unit 22. The feeding unit 24 feeds sheets to the printer unit 22 one by one at the timing when the printer unit 22 forms a toner image. The feeding unit 24 is arranged below the apparatus main body 20. For example, the feeding unit 24 includes a plurality of (four in FIG. 1) feeding trays 25A to 25D. The plurality of feeding trays 25A to 25D are arranged to overlap in the vertical direction.

The apparatus main body 20 is provided with a sheet feeding path L3 for transporting the sheet fed from the feeding unit 24 to the printer unit 22. In FIG. 1, reference numeral 26 denotes a feeding roller pair, reference numeral 27 denotes a registering roller pair, reference numeral 28 denotes a heating roller, and reference numeral 29 denotes a pressing roller. The heating roller 28 and the pressing roller 29 constitute the fixing unit 23. The sheet feeding path L3 is formed by the feeding roller pair 26, the registering roller pair 27, and the fixing unit 23.

The transport mechanism 30 transports the reading-completed document to the apparatus main body 20. The transport mechanism 30 includes a plurality of (four in the figure) transport roller pairs 31A to 31D that form the transport path L2. The four transport roller pairs 31A to 31D are a first transport roller pair 31A, a second transport roller pair 31B, a third transport roller pair 31C, and a fourth transport roller pair 31D. Each of the transport roller pairs 31A to 31D includes two transport rollers facing each other. For example, the two transport rollers are a driving roller and a driven roller. The driving roller is rotationally driven by a motor (not illustrated). The driven roller rotates (performs followed rotation) as the driving roller rotates.

The four transport roller pairs 31A to 31D are arranged in the order of the first transport roller pair 31A, the second transport roller pair 31B, the third transport roller pair 31C, and the fourth transport roller pair 31D from the ADF 10 toward the apparatus main body 20.

The transport mechanism 30 includes a transport unit 32 for post-processing that transports the reading-completed document to the post-processing apparatus 3. The transport unit 32 for post-processing circumvents the fixing unit 23 to transport the reading-completed document to the post-processing unit. The transport unit 32 for post-processing transports the reading-completed document to the post-processing unit along a path not passing through the fixing unit 23. Alternatively, the transport unit 32 for post-processing transports the sheet discharged from the printer unit 22 to the post-processing apparatus 3.

The transport unit 32 for post-processing includes a plurality of (two in the figure) transport roller pairs 33A and 33B constituting a transport path L4 for post-processing. The two transport roller pairs 33A and 33B are arranged horizontally spaced from each other. Each of the transport roller pairs 33A and 33B includes two transport rollers facing each other. For example, the two transport rollers are a driving roller and a driven roller. The driving roller is rotationally driven by a motor (not illustrated). The driven roller rotates (performs followed rotation) as the driving roller rotates.

The transport path L4 for post-processing is continuous with each of the transport path L2 and the sheet feeding path L3. In the document transport direction, the upstream end of the transport path L4 for post-processing is connected to the downstream end of the transport path L2. In the sheet transport direction, the upstream end of the transport path L4 for post-processing is connected to the downstream end of the sheet feeding path L3.

For example, the document reversing unit 40 is an automatic duplex copy unit (ADU) . The document reversing unit 40 (hereinafter, referred to as an "ADU 40") is provided on the side of the apparatus main body 20. The ADU 40 is provided on the side of the apparatus main body 20 opposite to the installation side of the post-processing apparatus 3. The ADU 40 turns inside out the document. The ADU 40 includes a switching unit 41 for document reversing (second switching unit) that switches between a transport path L2 and a reversing path L5. The transport path L2 is a path for transporting the reading-completed document to the apparatus main body 20 as it is. The reversing path L5 is a path for reversing the reading-completed document and transporting the reading-completed document to the apparatus main body 20.

The ADU 40 includes a reversing roller pair 42 that forms a reversing path L5. The reversing roller pair 42 includes two reversing rollers facing each other. For example, the two reversing rollers are a driving roller and a driven roller. The driving roller is rotationally driven by a motor (not illustrated). The driven roller rotates (performs followed rotation) as the driving roller rotates.

The reversing roller pair 42 is arranged vertically below the third transport roller pair 31C. The reversing roller pair 42 is arranged at a position farther away from the apparatus main body 20 than from the fourth transport roller pair 31D. The reversing roller pair 42 is arranged below the fourth transport roller pair 31D. The driving roller of the reversing roller pair 42 can perform forward rotation (clockwise rotation) and reverse rotation (counterclockwise rotation).

The reversing path L5 is connected to the middle of the transport path L2. The switching unit 41 for document reversing is arranged in the vicinity of a connection position P1 between the reversing path L5 and the transport path L2. The switching unit 41 for document reversing switches whether the document fed from the third transport roller pair 31C is directed to the fourth transport roller pair 31D or to the reversing roller pair 42. The switching unit 41 for document reversing turns inside out the document directed from the third transport roller pair 31C to the reversing roller pair 42 and directs the document to the fourth transport roller pair 31D.

The control panel 45 is arranged on the top of the apparatus main body 20. The control panel 45 is arranged on the side of the ADF 10. The control panel 45 is arranged in the vicinity of the post-processing apparatus 3. For example, the control panel 45 is a touch panel. The control panel 45 includes a display unit for performing displaying of characters or images. The control panel 45 includes an operation unit operated by the user. In the control panel 45, the display unit and the operation unit are integrated.

Next, the image processing control unit 50 will be described.

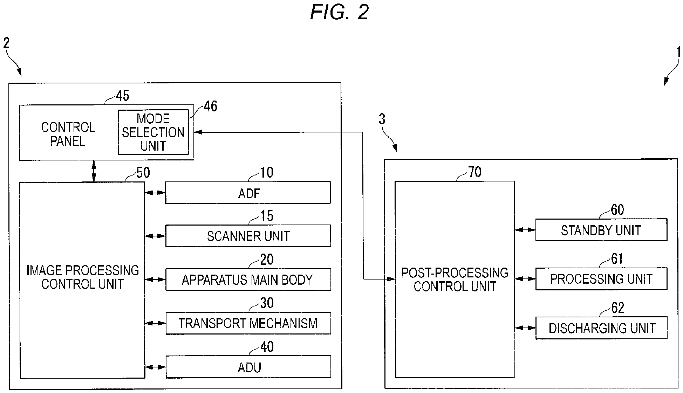

FIG. 2 is a block diagram illustrating the example of the image processing system 1 according to the first embodiment.

The image processing control unit 50 controls the overall operations of the image processing apparatus 2. The image processing control unit 50 controls the ADF 10, the scanner unit 15, the apparatus main body 20, the transport mechanism 30, the ADU 40, and the control panel 45. The image processing control unit 50 is configured with a control circuit including a CPU, a ROM, and a RAM. The image processing control unit 50 is an example of a "control unit".

For example, the image processing control unit 50 controls switching between a document discharging mode and a post-processing mode. Herein, the document discharging mode is a mode for discharging the reading-completed document to the discharging unit 11 (refer to FIG. 1) . The post-processing mode is a mode for transporting the reading-completed document to the post-processing apparatus 3.

The control panel 45 performs a display enabling selection of the document discharging mode and the post-processing mode. For example, the control panel 45 displays a button as a mode selection unit 46 (operation unit) capable of selecting the document discharging mode and the post-processing mode. By the user selecting the "document discharging mode" and touching the button at the time of mode selection, the image processing control unit 50 allows the reading-completed document to be discharged to the discharging unit 11 as it is. On the other hand, by the user selecting the "post-processing mode" and touching the button at the time of mode selection, the image processing control unit 50 transports the reading-completed document to the post-processing apparatus 3.

For example, when displaying the post-processing mode, the control panel 45 receives an input regarding the type of post-processing of the document. The control panel 45 feeds the input information on the type of post-processing to the post-processing apparatus 3.

Next, the post-processing apparatus 3 will be described.

As illustrated in FIG. 1, the post-processing apparatus 3 is arranged adjacent to the image processing apparatus 2. The post-processing apparatus 3 executes the post-processing designated through the control panel 45 on the object transported from the image processing apparatus 2. The objects include the reading-completed documents and sheets. For example, post-processing is binding (stapling processing) or sorting. The post-processing apparatus 3 includes a standby unit 60, a processing unit 61, a discharging unit 62, and a post-processing control unit 70. In the embodiment, the object is transported from the image processing apparatus 2 to the discharging unit 62.

The standby unit 60 temporarily holds (buffers) the object transported from the image processing apparatus 2. For example, while the post-processing of the preceding sheet is performed by the processing unit 61, the standby unit 60 allows the plural subsequent sheets to stand by. The standby unit 60 is arranged above the processing unit 61. When the processing unit 61 becomes empty, the standby unit 60 allows the sheet that has been staying to fall toward the processing unit 61.

The processing unit 61 post-processes the sheets. For example, the processing unit 61 aligns a plurality of sheets. The processing unit 61 binds a plurality of aligned sheets. Thus, a plurality of sheets is bound. The processing unit 61 discharges the post-processed sheets to the discharging unit 62.

The discharging unit 62 includes a fixed tray 63 and a movable tray 64. The fixed tray 63 is provided on the top of the post-processing apparatus 3. The movable tray 64 is provided on the side of the post-processing apparatus 3. The sheets subjected to the sorting are discharged to the fixed tray 63 and the movable tray 64.

Next, the post-processing control unit 70 will be described.

As illustrated in FIG. 2, the post-processing control unit 70 controls the overall operations of the post-processing apparatus 3. The post-processing control unit 70 controls the standby unit 60, the processing unit 61, and the discharging unit 62. The post-processing control unit 70 is configured with a control circuit including a CPU, a ROM, and a RAM.

For example, the post-processing control unit 70 controls switching between a processing mode and a non-processing mode (normal mode). Herein, the processing mode denotes a mode for post-processing the object. For example, the processing mode includes a sorting mode and a stapling mode. The non-processing mode denotes a mode for transporting the object as it is without post-processing the object.

For example, the control panel 45 displays a button as a mode selection unit 46 (operation unit) capable of selecting the processing mode and the non-processing mode. For example, the control panel 45 enables selection of the processing mode and the non-processing mode in the document discharging mode. By the user selecting the "processing mode" and touching the button at the time of mode selection, the post-processing control unit 70 allows the sheet to be post-processed. On the other hand, by the user selecting the "non-processing mode" and touching the button at the time of mode selection, the post-processing control unit 70 allows the sheet to be discharged as it is without post-processing the sheet.

Next, switching control of the transport path will be described.

The image processing control unit 50 switches the transport path in accordance with the mode selected by the user. Herein, an upstream path L21 of the transport path L2 is referred to as a "first transport path L21", and a downstream path L22 of the transport path L2 is referred to as a "second transport path L22" with the connection position P1 between the reversing path L5 and the transport path L2 as a base point (refer to FIG. 1).

FIG. 3 is an explanatory diagram of a document discharge path in the document discharging mode according to the first embodiment.

As illustrated in FIG. 3, when the document discharging mode is selected, the image processing control unit 50 sets the switching unit 12 for transporting to main body to a position intersecting the first transport path L21. When the document discharging mode is selected, the image processing control unit 50 allows the switching unit 12 for transporting to main body to form the discharge path L1. Therefore, the document (hereinafter, referred to as an "ADF-placed document") placed on the ADF 10 is discharged to the discharging unit 11 along the discharge path L1 (refer to an arrow V1 in FIG. 3). The ADF-placed document is discharged to the discharging unit 11 by the plurality of transport roller pairs 13A to 13D of the ADF 10. The ADF-placed document is read by the scanner unit 15 and, after that, discharged to the discharging unit 11.

FIG. 4 is an explanatory diagram of a document transport path in the post-processing mode of the first embodiment.

As illustrated in FIG. 4, when the post-processing mode is selected, the image processing control unit 50 sets the switching unit 12 for transporting to main body to a position avoiding the first transport path L21. When the post-processing mode is selected, the image processing control unit 50 allows the switching unit 12 for transporting to main body to form the transport path L2. Therefore, the ADF-placed document is read by the scanner unit 15 and, after that, transported toward the ADU 40 along the transport path L2 (refer to an arrow V2 in FIG. 4). When the post-processing mode is selected, the ADF-placed document is not directed to the discharging unit 11.

When the post-processing mode is selected, the image processing control unit 50 sets the switching unit 41 for document reversing to a position avoiding the reversing path L5. When the post-processing mode is selected, the image processing control unit 50 allows the switching unit 41 for document reversing to form the reversing path L5. Thus, the document (reading-completed document) transported to the ADU 40 enters the reversing path L5 (refer to an arrow V3 in FIG. 4). The image processing control unit 50 allows the document to enter the reversing path L5 until the downstream end of the document passes through the connection position P1 (refer to FIG. 1).

After the downstream end of the document passes through the connection position PI, the image processing control unit 50 sets the switching unit 41 for document reversing to a position intersecting the first transport path L21 (the position of a broken line in FIG. 4). After the downstream end of the document passes through the connection position PI, the image processing control unit 50 allows the reversing path L5 and the second transport path L22 to form a path of the document. Therefore, the document that has entered the reversing path L5 is turned inside out. The turned-inside-out document enters the second transport path L22 (refer to an arrow V4 in FIG. 4).

The transport unit 32 for post-processing circumvents the fixing unit 23 to transport the document having entered the second transport path L22 toward the post-processing apparatus 3. Specifically, the transport unit 32 for post-processing transports the document having entered the second transport path L22 toward the post-processing apparatus 3 along the paths (transport paths L2 and L4) not passing through the fixing unit 23 (refer to an arrow V5 in FIG. 4). The document having entered the second transport path L22 is not directed to the sheet feeding path L3. The document transported to the post-processing apparatus 3 is subjected to post-processing (for example, binding) by the operation of the processing unit 61. The post-processed document is discharged to the discharging unit 62.

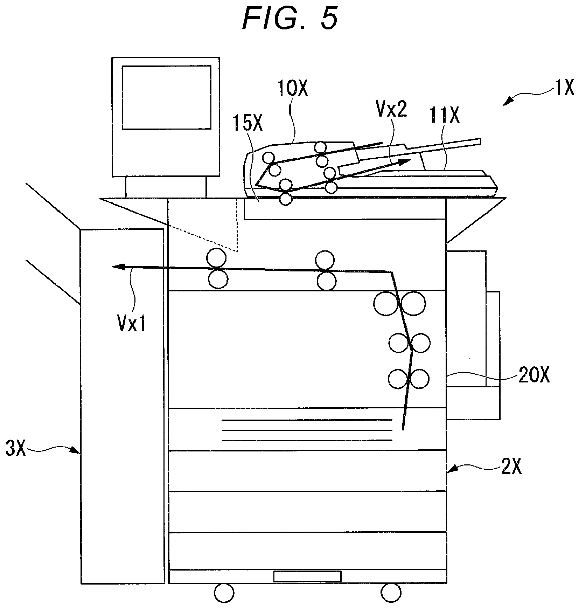

By the way, there is a structure (Comparative Example) in which the document reading unit and the apparatus main body are independent from each other. FIG. 5 is a front view illustrating an example of an image processing system 1X according to Comparative Example. In FIG. 5, reference numeral 2X denotes an image processing apparatus, reference numeral 3X denotes a post-processing apparatus, reference numeral 10X denotes an ADF, reference numeral 15X denotes a scanner unit, and reference numeral 20X denotes an apparatus main body. As illustrated in FIG. 5, the image processing system 1X according to Comparative Example does not include the transport mechanism 30 according to the embodiment.

The post-processing apparatus 3X performs post-processing such as binding on the sheet transported from the apparatus main body 20X (refer to an arrow Vx1 in FIG. 5) . The image forming system 1X discharges the reading-completed document to a discharging unit 11X (refer to an arrow Vx2 in FIG. 5). For this reason, post-processing cannot be immediately performed on the reading-completed document. For example, in the case of scanning or copying a plurality of documents stapled with a stapler, the stapler needs to be removed from the stapled documents. Then, after scanning or copying the plurality of documents from which the stapler has been removed, a user's operation of taking out the documents from the discharging unit 11X and binding the documents to return the documents to the original state is required.

As described above, if the scanner unit 15X and the apparatus main body 20X are independent from each other, a user's operation of transferring the reading-completed document to the apparatus main body 20X is required, which takes time and effort.

According to the first embodiment, the image processing system 1 includes an ADF 10, a scanner unit 15, an apparatus main body 20, and a transport mechanism 30. The ADF 10 feeds the document. The scanner unit 15 reads the document fed by the ADF 10. The apparatus main body 20 supports the scanner unit 15. The transport mechanism 30 transports the reading-completed document to the apparatus main body 20. With the above-described configuration, the following effects can be obtained.

The reading-completed document can be automatically transported to the apparatus main body 20 by the transport mechanism 30. Therefore, it is possible to omit the user's operation of transferring the reading-completed document to the apparatus main body 20.

The ADF 10 includes a switching unit 12 for transporting to main body that switches between a discharge path L1 and a transport path L2. The discharge path L1 is a path for discharging the reading-completed document to the discharging unit 11. The transport path L2 is a path for transporting the reading-completed document to the apparatus main body 20. With the above-described configuration, the following effects can be obtained.

Since the discharge path L1 and the transport path L2 can be formed by switching of the switching unit 12 for transporting to main body, it is possible to suppress erroneous transport of the document. For example, when the reading-completed document is discharged to the discharging unit 11, it is possible to suppress that the document is erroneously directed to the transport path L2. On the other hand, when the reading-completed document is transported to the apparatus main body 20, it is possible to suppress that the document is erroneously directed to the discharge path L1.

The image processing system 1 further includes an ADU 40 provided in the apparatus main body 20. The ADU 40 turns inside out the document. The ADU 40 includes a switching unit 41 for document reversing that switches between a transport path L2 and a reversing path L5. The transport path L2 is a path for transporting the reading-completed document to the apparatus main body 20 as it is. The reversing path L5 is a path for reversing the reading-completed document and transporting the reading-completed document to the apparatus main body 20. With the above-described configuration, the following effects can be obtained.

When a plurality of the documents is continuously transported, the discharging unit 62 can hold the order of the front and back of the documents. In addition, the binding position for a plurality of the documents can be held at the rear end of the document (upstream end in the document transport direction).

The image processing system 1 further includes a post-processing apparatus 3 that post-processes an object transported from the apparatus main body 20. The transport mechanism 30 includes a transport unit 32 for post-processing that transports the reading-completed document to the post-processing apparatus 3. With the above-described configuration, the following effects can be obtained.

The reading-completed document can be automatically transported to the post-processing apparatus 3 by the transport unit 32 for post-processing. Therefore, it is possible to immediately automatically post-process the reading-completed document. That is, it becomes possible to automatically finish the document. According to the embodiment, after scanning or copying a plurality of documents from which the stapler has been removed, the user's effort of binding the documents to return the documents to the original state is not required.

The apparatus main body 20 includes a fixing unit 23 that fixes an image. The transport unit 32 for post-processing transports the reading-completed document to the post-processing apparatus 3 along a path not passing through the fixing unit 23. With the above-described configuration, the following effects can be obtained.

The reading-completed document can be smoothly transported to the post-processing apparatus 3 by the transport unit 32 for post-processing.

The image processing system 1 further includes a control panel 45 that performs a display enabling selection of the document discharging mode and the post-processing mode. The document discharging mode is a mode for discharging the reading-completed document to the discharging unit 11. The post-processing mode is a mode for transporting a reading-completed document to the post-processing apparatus 3. With the above-described configuration, the following effects can be obtained.

By displaying each mode on the control panel 45, it is possible to automatically transport the reading-completed document to the post-processing apparatus 3 as necessary.

Next, a second embodiment will be described.

The apparatus main body 20 is not limited to the apparatus main body including the fixing unit 23 that fixes the image.

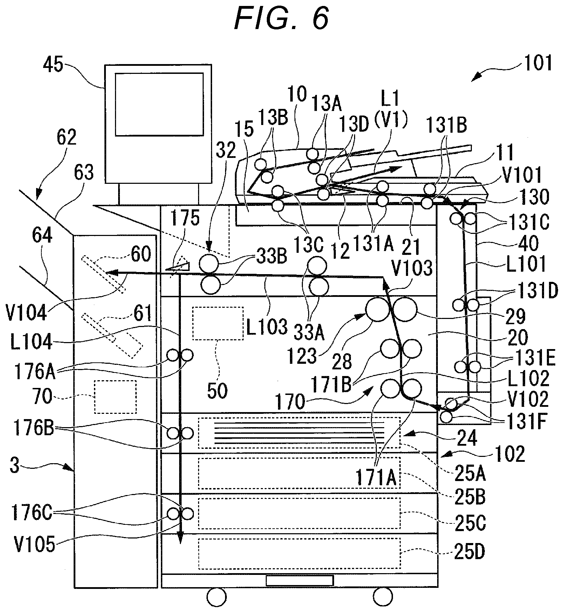

FIG. 6 is a front view illustrating the image processing system 101 according to the second embodiment.

As illustrated in FIG. 6, the apparatus main body 20 includes a heating unit 123 (color-erasing unit) that color-erases the color-erasable toner. The heating unit 123 functions as a fixing unit and a color-erasing unit. Hereinafter, the heating unit 123 is also referred to as a "color-erasing unit 123".

The color-erasable toner has the property of being color-erased by an external stimulus. The term "color-erasing" denotes allowing an image formed in a color (including not only chromatic colors but also achromatic colors such as white and black) different from the color of the background of the paper to be visually invisible. For example, the external stimuli are temperature, light having a specific wavelength, and pressure. In the embodiment, the color-erasable toner is color-erased when the toner reaches a specific color-erasing temperature or more. The color-erasable toner exhibits color when the toner reaches a specific recovery temperature after the color-erasing.

The image processing apparatus 102 according to the embodiment executes printing in the following three modes.
- Monochrome toner mode: An image is formed with color-unerasable black single-color toner.
- Color toner mode: An image is formed with color-unerasable monochrome toner and color toner.
- Color-erasable toner mode: An image is formed with only color-erasable toner.

The user can select which mode to perform image formation by operating the control panel 45.

The fixing temperature of the color-erasable toner is lower than the fixing temperature of the color-unerasable toner (normal toner). Herein, the fixing temperature of the color-erasable toner denotes the temperature of the heating roller 28 in the color-erasable toner mode. The fixing temperature of the color-unerasable toner denotes the temperature of the heating roller 28 in the monochrome toner mode or the color toner mode.

The fixing temperature of the color-erasable toner is lower than the temperature of the color-erasing of the color-erasable toner. Herein, the temperature of the color-erasing of the color-erasable toner denotes the temperature of the heating roller 28 in the color-erasing mode.

The image processing apparatus 102 includes a transport unit 170 for color-erasing that transports the reading-completed document to the color-erasing unit 123. The transport unit 170 for color-erasing transports the document transported from the ADU 40 to the apparatus main body 20 to the color-erasing unit 123. The transport unit 170 for color-erasing includes a plurality of (two in the figure) transport roller pairs 171A and 171B that form a transport path L102 for color-erasing. Each of the transport roller pairs 171A and 171B includes two transport rollers facing each other. For example, the two transport rollers are a driving roller and a driven roller. The driving roller is rotationally driven by a motor (not illustrated). The driven roller rotates (performs followed rotation) as the driving roller rotates.

The transport path L102 for color-erasing is continuous with a transport path L101 and a transport path L103 for discharging. In the document transport direction, the upstream end of the transport path L102 for color-erasing is connected to the downstream end of the transport path L101. In the document transport direction, the downstream end of the transport path L102 for color-erasing is connected to the upstream end of the transport path L103 for discharging. In FIG. 6, reference numerals 131A to 131F denote a plurality of (six in the figure) transport roller pairs constituting a transport mechanism 130 according to the embodiment. The plurality of transport roller pairs 131A to 131F form the transport path L101 extending from the ADF 10 to the apparatus main body 20 via the ADU 40.

The image forming system 101 may further include a color-erased document discharge path switching unit 175 that switches between a transport path L103 for discharging and a transport path L104 for feeding. The transport path L103 for discharging is a path for transporting the document color-erased by the color-erasing unit 123 to the discharging unit 62. The transport path L104 for feeding is a path for transporting the document color-erased by the color-erasing unit 123 to the feeding unit 24. The transport path L104 for feeding and the color-erased document discharge path switching unit 175 are arranged inside the apparatus main body 20.

In FIG. 6, reference numerals 176A to 176C denote a plurality of (three in the figure) feeding roller pairs, respectively. The transport path L104 for feeding is formed by a plurality of feeding roller pairs 176A to 176C. The plurality of feeding roller pairs 176A to 176C is arranged at positions avoiding the feeding trays 25A to 25D. For example, the lowermost stage of the plurality of feeding trays 25A to 25D functions as a tray for accommodating the document color-erased by the color-erasing unit 123.

For example, the image processing control unit 50 controls switching between a document discharging mode and a color-erasing mode. Herein, the document discharging mode is a mode for discharging the reading-completed document to the discharging unit 11. The color-erasing mode is a mode for transporting the reading-completed document to the color-erasing unit 123.

The control panel 45 performs a display enabling selection of the document discharging mode and the color-erasing mode. For example, the control panel 45 displays a button as a mode selection unit 46 (operation unit) capable of selecting the document discharging mode and the color-erasing mode. By the user selecting the "document discharging mode" and touching the button at the time of mode selection, the image processing control unit 50 allows the reading-completed document to be discharged to the discharging unit 11 as it is. On the other hand, by the user selecting the "color-erasing mode" and touching the button at the time of mode selection, the image processing control unit 50 allows the reading-completed document to be transported to the color-erasing unit 123.

For example, when the color-erasing mode is selected, the control panel 45 displays a button as a mode selection unit 46 (operation unit) capable of selecting the transport mode for discharging and the transport mode for feeding. By the user selecting the "transport mode for discharging" and touching the button at the time of mode selection, the image processing control unit 50 allows the document color-erased by the color-erasing unit 123 to be discharged to the discharging unit 62. On the other hand, by user selecting the "transport mode for feeding" and touching the button at the time of mode selection, the image processing control unit 50 allows the document color-erased by the color-erasing unit 123 to be discharged to the feeding unit 24.

Next, switching control of the transport path will be described.

The image processing control unit 50 switches the transport path in accordance with the mode selected by the user.

When the document discharging mode is selected, the image processing control unit 50 sets the switching unit 12 for transporting to main body to a position intersecting the upstream end of the transport path L101. When the document discharging mode is selected, the image processing control unit 50 allows the switching unit 12 for transporting to main body to form the discharge path L1. Therefore, the ADF-placed document is discharged to the discharging unit 11 along the discharge path L1 (refer to an arrow V1 in FIG. 6).

When the color-erasing mode is selected, the image processing control unit 50 sets the switching unit 12 for transporting to main body to a position avoiding the upstream end of the transport path L101. When the color-erasing mode is selected, the image processing control unit 50 allows the switching unit 12 for transporting to the main body to form the transport path L101. Therefore, the ADF-placed document is read by the scanner unit 15 and, after that, transported toward the ADU 40 along the transport path L101 (refer to an arrow V101 in FIG. 6). When the post-processing mode is selected, the ADF-placed document is not directed to the discharging unit 11.

The document (reading-completed document) transported to the ADU 40 enters the transport path L102 for color-erasing (refer to an arrow V102 in FIG. 6). The document that has entered the transport path L102 for color-erasing is color-erased by the operation of the color-erasing unit 123. The color-erased document enters the transport path L103 for discharging (refer to an arrow V103 in FIG. 6).

When the transport mode for discharging is selected, the image processing control unit 50 sets the color-erased document discharge path switching unit 175 to a position avoiding the transport path L103 for discharging. When the transport mode for discharging is selected, the image processing control unit 50 allows the color-erased document discharge path switching unit 175 to form the transport path L103 for discharging. Therefore, the color-erased document passes through the transport path L103 for discharging, and is discharged to the discharging unit 62 (refer to an arrow V104 in FIG. 6). When the transport mode for discharging is selected, the color-erased document is not directed to the feeding unit 24.

On the other hand, when the transport mode for feeding is selected, the image processing control unit 50 sets the color-erased document discharge path switching unit 175 to a position intersecting the transport path L103 for discharging. When the transport mode for feeding is selected, the image processing control unit 50 allows the color-erased document discharge path switching unit 175 to form the transport path L104 for feeding. When the transport mode for feeding is selected, the color-erased document discharge path switching unit 175 is set to a position (position of a broken line in FIG. 6) downstream of the connection position of the transport path L103 for discharging with the transport path L104 for feeding. Therefore, the color-erased document passes through the transport path L104 for feeding and is discharged to the feeding unit 24 (refer to an arrow V105 in FIG. 6).

By the way, the image forming system 1X according to Comparative Example (refer to FIG. 5) does not include the transport unit 170 for color-erasing (transport mechanism 130) of the embodiment. For example, Comparative Example is an MFP having a color-erasing function (hereinafter, referred to as a "color-erasing MFP"). The color-erasing MFP includes a color-erasing tray that accommodates a document (hereinafter, referred to as a "color-erasable toner document") printed with color-erasable toner. The color-erasing tray is arranged in the apparatus main body of the color-erasing MFP. For example, in the case of scanning or copying the color-erasable toner document, in order to reuse the color-erasable toner document, the user's operation of taking out the color-erasable toner document from the discharging unit and accommodating the color-erasable toner document in the color-erasing tray of the apparatus main body is required.

According to the second embodiment, the apparatus main body 20 includes a color-erasing unit 123 which color-erases the color-erasable toner. The image processing system 101 further includes a transport unit 170 for color-erasing that transports the reading-completed document to the color-erasing unit 123. With the above-described configuration, the following effects can be obtained.

The reading-completed document can be automatically transported to the color-erasing unit 123 by the transport unit 170 for color-erasing. Therefore, it is possible to immediately automatically color-erase the color-erasable toner document of which reading has been completed by the scanner unit 15. That is, the scanned document is color-erased as it is and can be used as printing paper. According to the embodiment, in the case of scanning or copying a color-erasable toner document, in order to reuse the color-erasable toner document, a user's effort of accommodating the color-erasable toner document in the feeding trays 25A to 25D of the apparatus main body 20 is not required. In addition, since the document is scanned before the color-erasing, the document can be stored in a server before the color-erasing.

The image forming system 101 further includes a color-erased document discharge path switching unit 175 that switches between a transport path L103 for discharging and a transport path L104 for feeding. The transport path L103 for discharging is a path for transporting the document color-erased by the color-erasing unit 123 to the discharging unit 11. The transport path L104 for feeding is a path for transporting the document color-erased by the color-erasing unit 123 to the feeding unit 24. With the above-described configuration, the following effects can be obtained.

Since the transport path L103 for discharging and the transport path L104 for feeding can be respectively formed by switching of the color-erased document discharge path switching unit 175, it is possible to selectively transport the document color-erased by the color-erasing unit 123 toward the discharging unit 62 or the feeding unit 24.

The transport path L104 for feeding and the color-erased document discharge path switching unit 175 are arranged inside the apparatus main body 20, so that the following effects can be obtained.

In comparison with the case where the transport path L104 for feeding and the color-erased document discharge path switching unit 175 are arranged outside the apparatus main body 20 (for example, the case where the transport path L104 for feeding and the color-erased document discharge path switching unit 175 are arranged inside the post-processing apparatus 3), it is possible to shorten the transport path L104 for feeding. Therefore, it is possible to smoothly transport the document color-erased by the color-erasing unit 123 toward the feeding unit 24.

The apparatus main body 20 is not limited to the apparatus main body including the heating unit 123 that functions as a fixing unit and a color-erasing unit. For example, the apparatus main body 20 may be provided with a fixing unit and a color-erasing unit separately and independently. For example, the color-erasing unit may be arranged in the vicinity of a tray for color-erasing separately from the fixing unit.

Next, Modified Example 1 of the embodiment will be described.

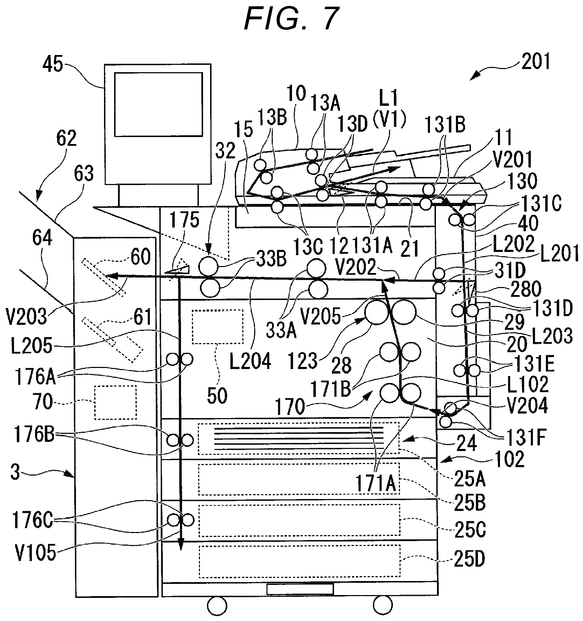

FIG. 7 is a front view illustrating an image processing system 201 according to Modified Example 1 of the embodiment.

As illustrated in FIG. 7, in addition to the configuration of the second embodiment, the image processing system 201 may further include a post-processing and color-erasing switching unit 280. The post-processing and color-erasing switching unit 280 switches between a transport path L202 for post-processing and a transport path L203 for color-erasing. The transport path L202 for post-processing is a path for transporting the reading-completed document to the post-processing apparatus 3. The transport path L203 for color-erasing is a path for transporting the reading-completed document to the heating unit 123 (color-erasing unit).

The control panel 45 provides a display enabling selection of the document discharging mode, the post-processing mode, and the color-erasing mode. For example, the control panel 45 displays a button as a mode selection unit 46 (operation unit) capable of selecting (1) a document discharging mode, (2) a post-processing mode, and (3) a color-erasing mode. (1) By the user selecting the "document discharging mode" and touching the button at the time of mode selection, the image processing control unit 50 allows the reading-completed document to be discharged to the discharging unit 11. (2) By the user selecting the "post-processing mode" and touching the button at the time of mode selection, the image processing control unit 50 allows the reading-completed document to be transported to the post-processing apparatus 3. (3) By the user selecting the "color-erasing mode" and touching the button at the time of mode selection, the image processing control unit 50 allows the reading-completed document to be transported to the color-erasing unit 123.

Next, switching control of the transport path will be described.

The image processing control unit 50 switches the transport path in accordance with the mode selected by the user.

When the document discharging mode is selected, the image processing control unit 50 sets the switching unit 12 for transporting to main body to a position intersecting the upstream end of a transport path L201. When the document discharging mode is selected, the image processing control unit 50 allows the switching unit 12 for transporting to main body to form the discharge path L1. Therefore, the ADF-placed document is discharged to the discharging unit 11 along the discharge path L1 (refer to an arrow V1 in FIG. 7).

When the post-processing mode is selected, the image processing control unit 50 sets the switching unit 12 for transporting to main body to a position avoiding the transport path L201. When the post-processing mode is selected, the image processing control unit 50 allows the switching unit 12 for transporting to main body to form the transport path L201. Therefore, the ADF-placed document is read by the scanner unit 15 and, after that, transported toward the ADU 40 along the transport path L201 (refer to an arrow V201 in FIG. 7). When the post-processing mode is selected, the ADF-placed document is not directed to the discharging unit 11.

When the post-processing mode is selected, the image processing control unit 50 sets the post-processing and color-erasing switching unit 280 to a position (position of a broken line in FIG. 7) avoiding the transport path L201. When the post-processing mode is selected, the image processing control unit 50 allows the transport path L201 and the transport path L202 for post-processing to form a document path. Therefore, the document transported to the ADU 40 enters the transport path L202 for post-processing (refer to an arrow V202 in FIG. 7).

The transport unit 32 for post-processing circumvents the color-erasing unit 123 to transport the document having entered the transport path L202 for post-processing toward the post-processing apparatus 3. Specifically, the transport unit 32 for post-processing transports the document having entered the transport path L202 for post-processing toward the post-processing apparatus 3 along paths (transport paths L202 and L204) which do not pass through the color-erasing unit 123 (refer to an arrow V203 in FIG. 7). The document having entered the transport path L202 for post-processing is not directed to the transport path L203 for color-erasing. The document transported to the post-processing apparatus 3 is subjected to post-processing (for example, binding) by the operation of the processing unit 61. The post-processed document is discharged to the discharging unit 62.

When the color-erasing mode is selected, the image processing control unit 50 sets the switching unit 12 for transporting to main body to a position avoiding the transport path L201. When the color-erasing mode is selected, the image processing control unit 50 allows the switching unit 12 for transporting to main body to form the transport path L201. Therefore, the ADF-placed document is read by the scanner unit 15 and, after that, transported toward the ADU 40 along the transport path L201 (refer to an arrow V201 in FIG. 7). When the color-erasing mode is selected, the ADF-placed document is not directed to the discharging unit 11.

When the color-erasing mode is selected, the image processing control unit 50 sets the post-processing and color-erasing switching unit 280 to a position avoiding the transport path L203 for color-erasing. When the color-erasing mode is selected, the image processing control unit 50 allows the transport path L201 and the transport path L203 for color-erasing to form the path of the document. Therefore, the document transported to the ADU 40 enters the transport path L203 for color-erasing (refer to an arrow V204 in FIG. 7) .

The document that has entered the transport path L203 for color-erasing is color-erased by the operation of the color-erasing unit 123. The color-erased document enters the transport path L204 for discharging (refer to an arrow V205 in FIG. 7).

When the transport mode for discharging is selected, the image processing control unit 50 allows the color-erased document to be discharged to the discharging unit 62 through the transport path L204 for discharging.

On the other hand, when the transport mode for feeding is selected, the image processing control unit 50 allows the color-erased document to be discharged to the feeding unit 24 through a transport path L205 for feeding.

According to this Modified example, the image processing system 201 further includes a post-processing and color-erasing switching unit 280 that switches between a transport path L202 for post-processing and a transport path L203 for color-erasing. The transport path L202 for post-processing is a path for transporting the reading-completed document to the post-processing apparatus 3. The transport path L203 for color-erasing is a path for transporting the reading-completed document to the color-erasing unit 123. With the above-described configuration, the following effects can be obtained.

Since the transport path L202 for post-processing and the transport path L203 for color-erasing can be respectively formed by switching of the post-processing and color-erasing switching unit 280, it is possible to selectively transport the reading-completed document toward the post-processing apparatus 3 or the color-erasing unit 123.

Next, Modified Example 2 of the embodiment will be described.

The image processing system is not limited to the image processing system including the ADU that turns inside out the document.

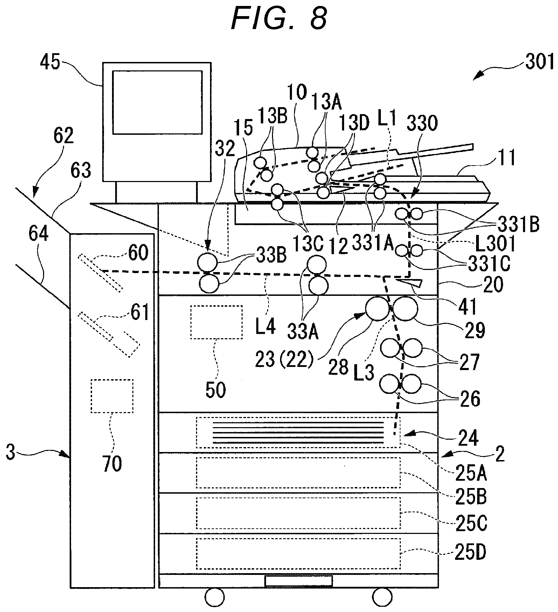

FIG. 8 is a front view illustrating an image processing system 301 according to Modified Example 2 of the embodiment.

As illustrated in FIG. 8, the image processing system 301 may not include the ADU 40 (refer to FIG. 1) . A transport mechanism 330 of this Modified Example is arranged inside the apparatus main body 20.

In FIG. 8, reference numerals 331A to 331C denote a plurality of (three in the figure) transport roller pairs constituting the transport mechanism 330 of this Modified Example. The plurality of transport roller pairs 331A to 331C form a transport path L301 extending from the ADF 10 to the apparatus main body 20.

According to this Modified Example, since there is no ADU 40 for turning inside out the document, it is possible to simplify the apparatus configuration.

Next, Modified Example 3 of the embodiment will be described.

The image processing system is not limited to the image processing system including a post-processing apparatus that post-processes the object transported from the apparatus main body.

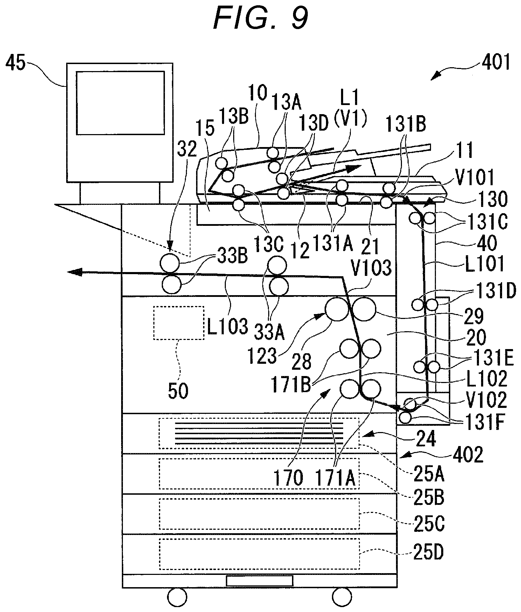

FIG. 9 is a front view illustrating an image processing system 401 according to Modified Example 3 of the embodiment.

As illustrated in FIG. 9, the image processing system 401 may not include the post-processing apparatus 3 (refer to FIG. 6). The image processing system 401 may be an image processing apparatus 402 (color-erasing apparatus) including the ADF 10, the scanner unit 15, the apparatus main body 20 including the color-erasing unit 123, and the transport mechanism 130 including the transport unit 170 for color-erasing. The transport path L104 for feeding and the color-erased document discharge path switching unit 175 are not provided inside the apparatus main body 20 according to this Modified Example (refer to FIG. 6).

According to this Modified Example, it is possible to provide the image processing apparatus 402 capable of immediately automatically color-erasing the color-erasable toner document of which reading has been completed by the scanner unit 15. In addition, since the post-processing apparatus 3 is not provided, it is possible to simplify the apparatus configuration. In addition, since the transport path L104 for feeding and the color-erased document discharge path switching unit 175 are not provided, it is possible to further simplify the apparatus configuration.

According to the image processing system of at least one embodiment described above, it is possible to omit the user's operation of transferring the document of which reading has been completed by the scanner unit 15 to the apparatus main body 20.

The functions of the image processing system in the above-described embodiment may be realized by a computer. In that case, a program for realizing these functions may be recorded in a computer readable recording medium, and the program recorded in the recording medium may be read and executed by a computer system. In addition, the "computer system" mentioned herein includes an OS and hardware such as peripheral devices. The "computer-readable recording medium" denotes a portable medium such as a flexible disk, a magneto-optical disk, a ROM, a CD-ROM, or a storage device such as a hard disk built in the computer system. Furthermore, the "computer-readable recording medium" may include a computer-readable recording medium that dynamically holds a program for a short time like a communication line when transmitting a program via a network such as the Internet or a communication line such as a telephone line or may also include a computer-readable recording medium that holds a program for a certain time such as volatile memory in a computer system that becomes a server or a client in that case. In addition, the program may be for realizing a portion of the functions described above or may be realized in combination with the program already recorded in the computer system.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention as defined by the appended claims.

## Claims

1. An image processing system, comprising:
a document transporter configured to feed a document;
a document reader configured to read the document fed by the document transporter;
an apparatus main body configured to support the document reader; and
a transport mechanism configured to transport the document after the document reader reads the document from the document reader to the apparatus main body.

2. The system according to claim 1, wherein
the document transporter includes a first switching unit configured to switch between a discharge path for discharging the document after reading has been completed by the document reader to a discharging unit and a transport path for transporting the document after reading has been completed by the document reader to the apparatus main body.

3. The system according to claim 1 or 2, further comprising: a document reversing unit provided in the apparatus main body and configured to turn the document inside out, wherein
the document reversing unit includes a second switching unit configured to switch between a transport path for transporting the document after reading has been completed by the document reader to the apparatus main body and a transport path for turning the document inside out after reading has been completed by the document reader and transporting the document to the apparatus main body.

4. The system according to any of claims 1 to 3, wherein
the apparatus main body further includes a post-processing unit configured to post-process an object transported from the apparatus main body, and
the transport mechanism includes a transporter for post-processing configured to transport the document after reading has been completed by the document reader to the post-processing unit.

5. The system according to claim 4, wherein
the apparatus main body includes a fixing unit configured to fixe an image, and
the transporter for post-processing transports the document after reading has been completed by the document reader to the post-processing unit along a path not passing through the fixing unit.

6. The system according to any of claims 1 to 5, wherein the apparatus main body has a sheet feeding path for transporting the sheet fed from the document transporter to a printer.

7. The system according to aby of claims 1 to 6, wherein the transport mechanism comprises a plurality of pairs of rollers.

8. An image processing method, comprising:
feeding a document into a document transporter of an image processing system;
reading the document fed by the document transporter; and
transporting the document after a document reader reads the document from the document reader to an apparatus main body of the image processing system.

9. The method according to claim 8, wherein
feeding the document comprises switching between a discharge path for discharging the document after reading has been completed by the document reader to a discharging unit and a transport path for transporting the document after reading has been completed by the document reader to the apparatus main body.

10. The method according to claim 8 or 9, further comprising: turning the document inside out using a document reversing unit, turning the document comprising:
switching between a transport path for transporting the document after reading has been completed by the document reader to the apparatus main body and a transport path for turning the document inside out after reading has been completed by the document reader and transporting the document to the apparatus main body.

11. The method according to any of claims 8 to 10, further comprising:
post-processing an object transported from the apparatus main body; and
transporting the document after reading has been completed by the document reader to post-processing.

12. The method according to claim 11, further comprising:
fixing an image; and
transporting the document after reading has been completed by the document reader to post-processing along a path not passing through a fixing unit.

13. The method according to any of claims 8 to 12, further comprising:
transporting the sheet fed from the document transporter to a printer.

14. An image forming apparatus, comprising:
a document transporter configured to feed a document;
a document reader configured to read the document fed by the document transporter;
a printer configured to form an image on a sheet;
an apparatus main body configured to support the document reader and the printer; and
a transport mechanism configured to transport the document after the document reader reads the document from the document reader to the apparatus main body.

15. The image forming apparatus according to claim 14, wherein
the document transporter includes a first switching unit configured to switch between a discharge path for discharging the document after reading has been completed by the document reader to a discharging unit and a transport path for transporting the document after reading has been completed by the document reader to the apparatus main body.
